# EUROPEAN PATENT APPLICATION

(11) **EP 4 765 255 A1**
(43) Date of publication of application: **24.06.2026**
(21) Application number: 25864550.6
(22) Date of filing: 23.09.2025
(51) Int. Cl.: H01M 4/62, H01M 4/131, H01M 4/525, H01M 4/505, H01M 4/02

(54) **POSITIVE ELECTRODE SLURRY COMPOSITION AND POSITIVE ELECTRODE MANUFACTURED USING SAME**

(30) Priority: 23.09.2024 KR 20240128577
(71) Applicant: LG Energy Solution, Ltd., Seoul 07335 (KR)
(72) Inventor: KIM, Young Seok, Daejeon 34122 (KR); SIM, Hye Jin, Daejeon 34122 (KR); JEONG, Jae Hoon, Daejeon 34122 (KR); KIM, Tae Gon, Daejeon 34122 (KR); LEE, Gil Ryeong, Daejeon 34122 (KR)
(74) Representative: Hoffmann Eitle
(86) International application number: PCT/KR2025/014906
(87) International publication number: WO 2026/063758

(57) **Abstract**

The present disclosure provides a positive electrode slurry composition including a positive electrode active material, a positive electrode conductive material, and a positive electrode binder, wherein the positive electrode binder includes an aramid-based polyamide polymer including a repeating unit of Formula 1 and a repeating unit of Formula 2, and wherein the molar fraction of the repeating unit of Formula 2 is 11 to 30 mol% based on the number of moles of the total repeating units of the aramid-based polyamide polymer.

[Formula 1] -[NH-A₁-NHCO-A₂-CO]-

In Formula 1, A₁ and A₂ are each independently a divalent organic group having an aromatic ring.

[Formula 2] -[NH-B₁-NHCO-B₂-CO]-

In Formula 2, B₁ and B₂ are each independently a divalent aliphatic organic group.

## Description

### [TECHNICAL FIELD]

This application claims priority from Korean Patent Application No. 10-2024-0128577, filed on September 23, 2024, the disclosure of which is incorporated by reference herein.

The present disclosure relates to a positive electrode slurry composition and a positive electrode prepared using the same.

### [BACKGROUND ART]

As industries using secondary batteries such as mobile phones, laptop computers, and electric vehicles rapidly grow, extensive research and development are being carried out to improve the performance of secondary batteries. Among them, lithium secondary batteries, which have high energy density and voltage, long cycle life, and low self-discharge rates have been commercialized and widely used.

Here, an electrode for a lithium-ion secondary battery typically includes a current collector and an electrode active material layer as a functional layer formed on the current collector. Further, the electrode active material layer is formed, for example, by applying a slurry-phase composition formed by dispersing a polymer serving as a binder in a dispersion medium onto the electrode current collector, and then drying.

Conventionally, a polyvinylidene fluoride (PVdF) binder having excellent electrochemical performance and thermal stability has been used as a positive electrode binder. However, the positive electrode slurry composition including polyvinylidene fluoride has the problem of increased viscosity or gelation over time.

### [DISCLOSURE OF THE INVENTION]

### [TECHNICAL PROBLEM]

To address such problems, the present disclosure aims to provide a positive electrode slurry composition having little time-dependent change.

In addition, the present disclosure aims to provide a positive electrode including materials having excellent electrochemical performance and thermal stability, and low toxicity and environmental harmfulness.

### [TECHNICAL SOLUTION]

The present disclosure provides a positive electrode slurry composition including an aramid-based polyamide polymer as a binder.

The present disclosure provides a positive electrode slurry composition including a positive electrode active material, a positive electrode conductive material, and a positive electrode binder, wherein the positive electrode binder includes an aramid-based polyamide polymer including a repeating unit of the following Formula 1 and a repeating unit of the following Formula 2, and wherein the molar fraction of the repeating unit of Formula 2 above is 11 to 30 mol% based on the number of moles of the total repeating units of the aramid-based polyamide polymer.

[Formula 1] -[NH-A₁-NHCO-A₂-CO]-

In Formula 1 above, A₁ and A₂ are each independently a divalent organic group having an aromatic ring.

[Formula 2] -[NH-B₁-NHCO-B₂-CO]-

In Formula 2 above, B₁ and B₂ are each independently a divalent aliphatic organic group.

In addition, the present disclosure provides a positive electrode including a positive electrode current collector, and a positive electrode active material layer including a positive electrode active material, a positive electrode conductive material, and a positive electrode binder, wherein the positive electrode binder includes an aramid-based polyamide polymer including a repeating unit of the following Formula 1 and a repeating unit of the following Formula 2, and wherein the molar fraction of the repeating unit of Formula 2 above is 11 to 30 mol% based on the number of moles of the total repeating units of the aramid-based polyamide polymer.

### [ADVANTAGEOUS EFFECTS]

The aramid-based polyamide polymer binder included in the positive electrode slurry composition of the present disclosure does not cause reactions such as dehydrofluorination with a lithium by-product, and thus does not form an active material/binder/conductive material composite. As a result, the positive electrode slurry composition of the present disclosure exhibits the effect of suppressing time-dependent change and gelation. Therefore, the use of the positive electrode slurry composition of the present disclosure is advantageous in that the slurry can be easily stirred and transferred, and its processability is improved.

In addition, the positive electrode prepared from the positive electrode slurry composition of the present disclosure exhibits improved overall characteristics, as the positive electrode active material layer is uniformly coated, and the entire electrode has uniform physical properties.

The positive electrode slurry composition of the present disclosure may include an aramid-based polyamide polymer having aliphatic repeating units in the structure at a level of 11 to 30 mol%, so that the viscosity of the positive electrode slurry composition is maintained neither too low nor too high. That is, the present disclosure can provide a positive electrode slurry composition that does not exhibit excessively high slurry viscosity even at a high solid content.

Accordingly, the positive electrode slurry composition of the present disclosure reduces the amount of the solvent to be evaporated during the formation of the positive electrode active material layer, thereby reducing the amount of thermal energy used and improving the drying process efficiency. In addition, the positive electrode slurry composition of the present disclosure has a shorter drying time when forming a positive electrode active material layer, thereby reducing thermal wrinkles and cracks in the prepared positive electrode.

### [MODE FOR CARRYING OUT THE INVENTION]

It will be understood that terms or words used in the present disclosure and claims shall not be construed as being limited to having meanings defined in commonly used dictionaries, but should be interpreted as having meanings and concepts consistent with the technical idea of the present disclosure based on the principle that an inventor may appropriately define concepts of the terms to best explain the invention.

It will be further understood that the terms "include," "comprise," or "have" in this disclosure specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the disclosure each denote the number of carbon atoms included in a specific functional group. That is, the functional group may include "a" to "b" carbon atoms. For example, an "alkylene group having 1 to 5 carbon atoms" refers to an alkylene group that is, -CH₂-, -CH₂CH₂-, -CH₂CH₂CH₂-, -CH₂(CH₃)CH-, -CH(CH₃)CH₂- or -CH(CH₃)CH₂CH₂-, etc.

In addition, in the present specification, an alkyl group may all be substituted or unsubstituted. Unless otherwise defined in the specification, the expression "substitution" denotes that at least one hydrogen bonded to carbon is substituted with an element other than hydrogen, for example, halogen atom, nitro group, nitrile group, etc.

In the present specification, "Weight-average molecular weight" can be measured using a gel permeation chromatography (GPC) apparatus. Specifically, in the present disclosure, the measurement is performed under GPC conditions using Agilent 1200 series, wherein the column used may be a PL mixed B column manufactured by Agilent, and the solvent may be tetrahydrofuran (THF) or dimethylformamide (DMF). Note that, unless otherwise specified in the present specification, the molecular weight may denote weight-average molecular weight.

In addition, in the present specification, "viscosity" can be measured with a commercially available viscometer. Specifically, in the present disclosure, "viscosity" was measured using a Rheometer MCR 302 manufactured by Anton Paar, and the viscosity was measured at 25 °C and a shear rate of 2.5 (1/s).

As polyvinylidene fluoride (PVDF) widely used as a binder for conventional positive electrodes increases viscosity over time, which impairs the workability of the electrode preparing process, and the mechanical properties of the resulting electrode are insufficient. In addition, its environmental residuality and toxicity cause environmental pollution. On the other hand, when the aramid-based polyamide polymer is used alone, heat resistance and mechanical rigidity are improved; however, there are issues with slurry viscosity and electrode manufacturing compatibility.

Accordingly, the present inventors have conducted a study to address the above problems, and found that when an aramid-based polyamide is applied as a positive electrode binder, the ratio of an aromatic repeating unit and an aliphatic repeating unit greatly affects the viscosity stability and time-dependent properties of the binder. The present inventors have investigated a solution that can simultaneously secure both viscosity stability and storage properties, and have derived the present disclosure.

Hereinafter, the present disclosure will be described in more detail.

### Positive electrode slurry composition

The present disclosure provides a positive electrode slurry composition comprising a positive electrode active material, a positive electrode conductive material, and a positive electrode binder.

The positive electrode binder included in the positive electrode slurry of the present disclosure may include an aramid-based polyamide polymer having a repeating unit of the following Formula 1.

[Formula 1] -[NH-A₁-NHCO-A₂-CO]-

In Formula 1 above, A₁ and A₂ may each independently be a divalent organic group having an aromatic ring. The aromatic ring refers to an arylene group having 6 to 12 carbon atoms. In addition, A₁ and A₂ may each independently include -SO₂-, -CO-, -COO-, -COOH, etc. in the structure.

In Formula 1 above, A₁ and A₂ may each independently be a divalent organic group selected from any one of Formula 1-1 to Formula 1-5.

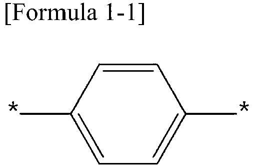

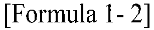

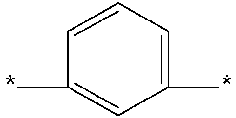

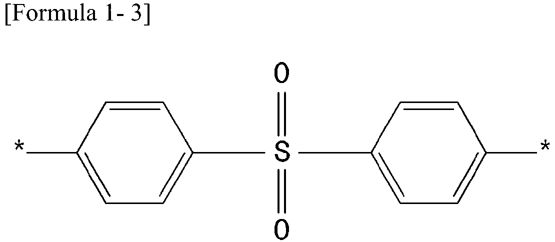

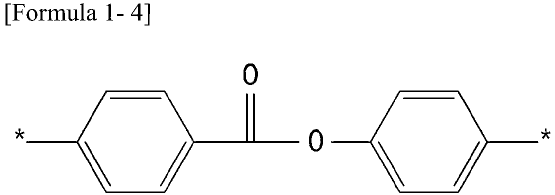

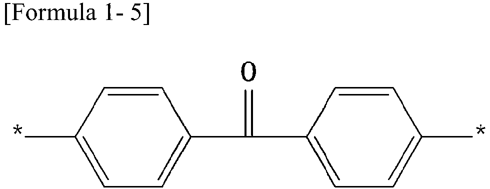

In Formula 1-1 to Formula 1-5, * is a bonding site.

In Formula 1 above, A₁ may each independently be a divalent organic group selected from any one of Formula 1-1 or Formula 1-2.

In Formula 1 above, A₂ may each independently be a divalent organic group selected from any one of Formula 1-3 to Formula 1-5.

The aramid-based polyamide polymer included in the positive electrode slurry composition of the present disclosure can suppress a phenomenon in which the active material is adsorbed to the binder, thereby suppressing the formation of an active material/binder/conductive material composite that causes gelation of the slurry composition.

The aramid-based polyamide polymer of the present disclosure may include the repeating unit of Formula 1 in a molar fraction of 70 to 89 mol %, preferably 73 to 88 mol %, and more preferably 75 to 87 mol %, based on the total number of moles of repeating units of the aramid-based polyamide polymer.

When the content of the aromatic repeating unit of Formula 1 included in the aramid-based polyamide polymer satisfies the above range, the overall slurry viscosity can be reduced to increase the solid content in the slurry. As a result, the viscosity of the positive electrode slurry composition can be maintained neither too low nor too high. That is, the present disclosure can provide a positive electrode slurry composition that does not exhibit excessively high slurry viscosity even at a high solid content.

Accordingly, the positive electrode slurry composition of the present disclosure reduces the amount of the solvent to be evaporated during the formation of the positive electrode active material layer, thereby reducing the amount of thermal energy used and improving the drying process efficiency. In addition, the positive electrode slurry composition of the present disclosure has a shorter drying time when forming a positive electrode active material layer, thereby reducing thermal wrinkles and cracks in the prepared positive electrode.

The aramid-based polyamide polymer of the present disclosure may include the repeating unit of Formula 1 in a weight fraction of 58 to 94 wt%, preferably 63.6 to 92.1 wt%, and more preferably 67.5 to 90.2 wt%, based on the total weight of the repeating unit of the aramid-based polyamide polymer.

The positive electrode binder included in the positive electrode slurry of the present disclosure may include an aramid-based polyamide polymer having a repeating unit of the following Formula 2.

[Formula 2] -[NH-B₁-NHCO-B₂-CO]-

In Formula 2 above, B₁ and B₂ may each independently be a divalent aliphatic organic group. Specifically, B₁ and B₂ may each independently be an alkylene group having 2 to 50 carbon atoms. B₁ and B₂ may each independently be -(CH₂)ₙ-, wherein the range of n may be 2 ≤ n ≤ 50, 2 ≤ n ≤ 20 or 2 ≤ n ≤ 10.

The aramid-based polyamide polymer included in the positive electrode slurry composition of the present disclosure may include the repeating unit of Formula 2 in a molar fraction of 11 to 30 mol %, preferably 12 to 27 mol %, and more preferably 13 to 25 mol %, based on the total number of moles of repeating units of the aramid-based polyamide polymer. When the content of the aliphatic repeating unit of Formula 2 included in the aramid-based polyamide polymer satisfies the above range, the viscosity of the slurry becomes an appropriate level, so that phase separation does not occur, and the brittleness of the prepared positive electrode is improved.

The aramid-based polyamide polymer of the present disclosure may include the repeating unit of Formula 2 in a weight fraction of 6 to 42 wt%, preferably 7.9 to 36.3 wt%, and more preferably 9.8 to 32.5 wt%, based on the total weight of the repeating unit of the aramid-based polyamide polymer.

The aramid-based polyamide polymer included in the positive electrode slurry composition of the present disclosure may have a weight-average molecular weight of 200,000g/mol to 600,000 g/mol, preferably 250,000 g/mol to 550,000 g/mol, and more preferably 300,000 g/mol to 500,000 g/mol. When the molecular weight satisfies the above range, the phase separation of the slurry composition does not occur, the positive electrode active material and the like are sufficiently dispersed, and the slurry composition can be uniformly stirred. In addition, when a positive electrode active material layer is prepared using the positive electrode slurry composition, it exhibits excellent adhesion to the electrode collector.

The aramid-based polyamide polymer included in the positive electrode slurry composition of the present disclosure may include one or more functional groups selected from a carbonyl group, a carboxy group, and an ester group.

Further, the functional group may be included in an amount of 0.01 to 0.3 mol % based on the total number of moles of the aramid-based polyamide polymer.

The viscosity at 25°C of the positive electrode slurry composition of the present disclosure may be from 3,000cP to 30,000cP, preferably 4,000 cP to 25,000 cP, and more preferably 5,000 cP to 20,000 cP.

The solid content may be 55 wt% or greater and 80 wt % or less, 60 wt% or greater and 79 wt% or less, or 65 wt% or greater and 75 wt% or less based on the total weight of the positive electrode slurry composition of the present disclosure. The positive electrode slurry composition of the present disclosure maintains a low viscosity even at a high solid content, which does not place a large load on the motor or transfer pump of a stirrer during the preparation of the slurry composition, thereby improving the processability of the positive electrode preparation process. In addition, when a positive electrode is prepared using the positive electrode slurry composition of the present disclosure, it exhibits uniform coating of the positive electrode active material layer.

The positive electrode active material is a compound capable of reversibly intercalating and deintercalating lithium, and may specifically include a lithium metal oxide including one or more metals such as cobalt, manganese, nickel, or aluminum and lithium. More specifically, the lithium metal oxide may be a lithium-manganese-based oxide (e.g.,, LiMnO₂, LiMn₂O₄ ,etc.), a lithium-cobalt-based oxide (e.g., LiCoO₂ , etc.), a lithium-nickel-based oxide (e.g., LiNiO₂ ,etc.), a lithium-nickel-manganese-based oxide (e.g., LiNi_{1-Y}Mn_{Y}O₂(wherein, 0<Y<1), LiMn_{2-Z}Ni_{Z}O₄(wherein 0 < Z < 2), etc.), a lithium-nickel-cobalt-based oxide (e.g., LiNi_{1-Y1}Co_{Y1}O₂(wherein, 0<Y1<1), etc.), a lithium-manganese-cobalt-based oxide (e.g., LiCo_{1-Y2}Mn_{Y2}O₂(wherein 0<Y2<1), LiMn_{2-Z1}Co_{Z1}O₄(wherein, 0 < Z1 < 2), etc.), a lithium-nickel-manganese-cobalt-based oxide (e.g., Li(NiₚCo_{q}Mnᵣ)O₂(wherein 0 < p < 1, 0 < q < 1, 0 < r < 1, p+q+r=1) or Li(Niₚ₁Co_{q1}Mnᵣ₁)O₄(wherein 0 < p1 < 2, 0 < q1 < 2, 0 < r1 < 2, p1+q1+r1=2), etc.), or a lithium-nickel-cobalt-transition metal (M) oxide (e.g. Li(Niₚ₂Co_{q2}Mnᵣ₂Mₛ₂)O₂(wherein M is selected from Al, Fe, V, Cr, Ti, Ta, Mg and Mo, p2, q2, r2 and s2 are each an atomic fraction of stand-alone elements, where 0 < p2 < 1, 0 < q2 < 1, 0 < r2 < 1, 0 < s2 < 1, p2+q2+r2+s2=1) etc.), etc., and any one thereof or a mixture of two or more thereof may be used.

Among these, due to the fact that the capacity properties and stability of a battery may be increased, the lithium metal oxide may be LiCoO₂, LiMnO₂, LiNiO₂, a lithium nickel-manganese-cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, etc.), or a lithium-nickel-cobalt-aluminum oxide (e.g., Li(Ni_{0.8}Co_{0.15}Al_{0.05})O₂, etc.) or the like, and any one thereof or a mixture of two or more thereof may be used.

Among them, the positive electrode active material included in the positive electrode slurry composition of the present disclosure may be a lithium transition metal oxide having the composition represented by Formula 3 below. The higher the nickel content, the more lithium byproducts such as LiOH and Li₂CO₃, etc. are eluted from the positive electrode active material. As a result, the positive electrode slurry composition readily undergoes time-dependent changes. However, the positive electrode slurry composition of the present disclosure can suppress such changes by adjusting the molar fraction of the aromatic repeating unit and the aliphatic repeating unit in the aramid-based polyamide polymer binder.

[Formula 3] LiₐNi_{1-x-y}CoₓM¹_{y}M²_{z}O₂

In Formula 3 above, M¹ may be one or more selected from Mn and Al, and preferably may be Mn or a combination of Mn and Al.

In Formula 3 above, M² may be any one element or two or more elements selected from Zr, Ti, Mg, Ta, Nb, W, Mo and Cr.
a represents a molar ratio of lithium in a lithium transition metal oxide, and may be 1.0≤a≤1.3, 1.0≤a≤1.2, or 1.0≤a≤1.1.
1-x-y represents a molar ratio of nickel among metal elements except for lithium in the lithium transition metal oxide, and may be 0.80≤1-x-y<1.0, 0.80≤1-x-y≤0.98, 0.80≤1-x-y≤0.95, 0.83≤1-x-y≤0.95, or 0.90≤1-x-y≤0.95. When the content of the nickel satisfies the above range, high capacity characteristics may be achieved.
x represents a molar ratio of cobalt among metal elements except for lithium in the lithium transition metal oxide, and may be 0<x<0.4, 0<x≤0.2, or 0.01≤x≤0.10.
y represents a molar ratio of the element M¹ among metal elements except for lithium in the lithium transition metal oxide, and may be 0<y<0.4, 0<y≤0.2, or 0.01≤y≤0.10.
z represents a molar ratio of the element M² among metal elements except for lithium in the lithium transition metal oxide, and may be 0≤z≤0.1, or 0≤z≤0.05.

The positive electrode active material included in the positive electrode active material layer of the present disclosure may be included in an amount of 95 wt% to 100 wt%, preferably 98 wt% to 100 wt% and more preferably 99 wt% to 100 wt% based on the total weight of the positive electrode active material included in the positive electrode active material layer.

The positive electrode conductive material is used to impart conductivity to an electrode, and can be used without any particular limitation as long as it does not cause chemical changes and has electron conductivity in a battery to be formed. Specific examples thereof may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The positive electrode conductive material may be included in an amount of 0.1 wt% to 15 wt% based on the total weight of the positive electrode slurry composition.

The positive electrode binder of the present disclosure may further include common binders. For example, specific examples thereof may be polyvinylidene fluoride (PVDF), polyvinylidene fluoride-hexafluoropropylene copolymer (PVDF-co-HFP), polyvinyl alcohol, polyacrylonitrile, polymethy methacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, polymers in which hydrogens thereof are substituted with Li, Na, or Ca, or various copolymers thereof, and any one thereof or a mixture of two or more thereof may be used. The additional binder may be included in an amount of 0.1 wt% to 5 wt% based on the total weight of the positive electrode slurry composition.

The positive electrode slurry composition of the present disclosure can be prepared by dissolving or dispersing a positive electrode active material, a positive electrode conductive material, a positive electrode binder, etc. in a solvent.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used.

The amount of the solvent used may be 20 wt% or greater and 45 wt % or less, 21 wt% or greater and 40 wt% or less, or 25 wt% or greater and 35 wt% or less based on the total weight of the positive electrode slurry composition.

### A positive electrode

The positive electrode of the present disclosure includes a positive electrode current collector; and a positive electrode active material layer including a positive electrode active material, a conductive material, and a binder. Since the positive electrode active material, conductive material and binder has been described above, its detailed description will be omitted, and only the remaining constitutions will be described below in detail.

The positive electrode of the present disclosure may be prepared by applying the above-described positive electrode slurry composition, followed by dried and rolled. In addition, in another method, the positive electrode may be prepared by casting the composition for forming a positive electrode slurry on a separate support, and then laminating a film separated from the support on the positive electrode current collector.

The positive electrode current collector of the present disclosure may include metals with high conductivity, and is not particularly limited as long as the positive electrode active material layer is easily adhered, and has no reactivity in the voltage range of the battery. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The aramid-based polyamide polymer may be included in an amount of 0.1 wt% or greater and 5 wt% or less, 0.5 wt% or greater and 3.5 wt% or less, 0.8 wt% or greater and 3.0 wt% or less, or 1.0 wt% or greater and 2.0 wt% or less.

### ELECTROCHEMICAL DEVICE

Hereinafter, the electrochemical device according to the present disclosure will be described. The electrochemical device according to the present disclosure includes the positive electrode of the present disclosure described above, and the electrochemical device may specifically be a battery, a capacitor, etc., and more specifically may be a lithium secondary battery.

The lithium secondary battery specifically includes a positive electrode, a negative electrode disposed to face the positive electrode, a separator between the positive electrode and the negative electrode, and an electrolyte. The positive electrode is the same as described above, and thus, its detailed description will be omitted. Hereinafter, only the remaining constitutions will be described in detail.

In addition, the lithium secondary battery may optionally further comprise a battery case accommodating an electrode assembly of the positive electrode, the negative electrode, and the separator, and a sealing member sealing the battery case.

In the lithium secondary battery of the present disclosure, the negative electrode may include a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 µm to 500 µm, and, similar to the positive electrode current collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The negative electrode active material layer optionally includes a negative electrode binder and a negative electrode conductive material together with the negative electrode active material.

A compound capable of reversibly intercalating and deintercalating lithium may be used as the negative electrode active material. Specific examples thereof include carbonaceous materials such as artificial graphite, natural graphite, graphitized carbon fiber, and amorphous carbon; metallic compounds capable of alloying with lithium such as Si, Al, Sn, Pb, Zn, Bi, In, Mg, Ga, Cd, Si alloys, Sn alloys or Al alloys; metal oxides capable of doping and de-doping lithium such as SiO_{β}(0<β<2), SnO₂, vanadium oxide, and lithium vanadium oxide; or composites including the metallic compounds and the carbonaceous materials such as Si-C composites or Sn-C composites, and any one of these or a mixture of two or more thereof may be used. In addition, a metal lithium thin film may be used as the negative electrode active material. As the carbon material, both low-crystalline carbon and high-crystalline carbon can be used. Examples of low-crystalline carbon are typically soft carbon and hard carbon, and examples of high-crystalline carbon include irregular, planar, flaky, spherical, or fibrous natural graphite or artificial graphite, Kish graphite, pyrolytic carbon, mesophase pitch based carbon fiber, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The negative electrode binder is a component that assists in the binding between the conductive material, the active material, and the current collector, wherein the binder is added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, and various copolymers thereof.

The negative electrode conductive material is a component for further improving the conductivity of the negative electrode active material, wherein the negative electrode conductive material may be added in an amount of 10 wt% or less, preferably 5 wt% or less based on the total weight of the negative electrode active material layer. Any conductive material may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used.

The negative electrode active material layer may be prepared by a method in which a negative electrode current collector is coated with a composition for forming a negative electrode active material layer prepared by dissolving or dispersing the negative electrode active material and optionally a binder and a conductive material in a solvent, dried and then rolled, or may be prepared by casting the composition for forming a negative electrode active material layer on a separate support and then laminating a film separated from the support on the negative electrode collector.

Meanwhile, in the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Examples of the electrolyte used in the present disclosure include, but are not limited to, an organic liquid electrolyte, an inorganic liquid electrolyte, a solid polymer electrolyte, a gel polymer electrolyte, a solid inorganic electrolyte, and a molten inorganic electrolyte that can be used in the preparation of a lithium secondary battery.

Specifically, the electrolyte may include an organic solvent and a lithium salt.

The organic solvent may be used without any particular limitation as long as it can serve as a medium through which ions involved in the electrochemical reaction of the battery can move. Specific examples of the organic solvent include ester-based solvents such as methyl acetate, ethyl acetate, γ-butyrolactone, ε-caprolactone; ether-based solvents such as dibutyl ether or tetrahydrofuran;ketone-based solvents such as cyclohexanone; aromatic hydrocarbon-based solvents such as benzene, fluorobenzene; carbonate-based solvents such as dimethylcarbonate (DMC), diethylcarbonate (DEC), methylethylcarbonate (MEC), ethylmethylcarbonate (EMC), ethylene carbonate (EC), propylene carbonate, (PC); alcohol-based solvents such as ethyl alcohol and isopropyl alcohol; nitriles such as R-CN(wherein R is a linear, branched, or cyclic hydrocarbon group having 2 to 20 carbon atoms and may include a double bond, an aromatic ring or an ether bond); amides such as dimethylformamide; dioxolans such as 1,3-dioxolane; and sulfolanes. Among these, a carbonate-based solvent is preferable, and a mixture of a cyclic carbonate (e.g., ethylene carbonate or propylene carbonate) having a high ionic conductivity and a high dielectric constant capable of enhancing the charge/discharge performance of the battery and a linear carbonate-based compound (e.g., ethyl methyl carbonate, dimethyl carbonate, or diethyl carbonate) having a low viscosity is more preferable.

The lithium salt may be used without any particular limitation as long as it is a compound capable of providing lithium ions used in a lithium secondary battery. Specifically, the anion of the lithium salt may be at least one selected from F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. It is preferable that the concentration of the lithium salt is 0.1 to 2.0 M. When the concentration of the lithium salt is included in the above range, the electrolyte has an appropriate conductivity and viscosity, which can exhibit excellent electrolyte performance, and lithium ions can be effectively transferred.

The electrolyte may further include one or more additives such as a haloalkylene carbonate-based compound such as difluoroethylene carbonate, pyridine, triethyl phosphite, triethanolamine, a cyclic ether, ethylene diamine, n-glyme, hexamethyl phosphoric triamide, a nitrobenzene derivative, sulfur, a quinone imine dye, N-substituted oxazolidinone, N,N-substituted imidazolidine, an ethylene glycol dialkyl ether, an ammonium salt, pyrrole, 2-methoxyethanol, or aluminum trichloride, in addition to the components constituting the electrolyte, for the purpose of improving battery life characteristics, suppressing battery capacity reduction, improving battery discharge capacity, etc. The additive may be included in an amount of 0.1 wt% to 5 wt% based on the total weight of the electrolyte.

Lithium secondary batteries including the positive electrode according to the present disclosure as described above may be suitably used in portable devices, such as mobile phones, notebook computers, and digital cameras, and electric cars such as hybrid electric vehicles (HEVs) as they stably exhibit excellent discharge capacity, output, and life characteristics.

Thus, according to another embodiment of the present disclosure, a battery module including the lithium secondary battery as a unit cell and a battery pack including the battery module are provided.

The battery module or the battery pack may be used as a power source for at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present disclosure is not particularly limited, but a cylindrical type using a can, a prismatic type, a pouch type, or a coin type may be used.

The lithium secondary battery according to the present disclosure may not only be used in a battery cell that is used as a power source of a small device, but may also be used as a unit cell in a medium and large sized battery module including a plurality of battery cells.

Examples of the medium and large sized device include, but are not limited to, an electric vehicle, a hybrid electric vehicle, a plug-in hybrid electric vehicle, and a power storage system.

### [MODE FOR CARRYING OUT THE INVENTION]

Hereinafter, the Examples of the present disclosure will be described in detail so that those skilled in the art to which the present disclosure pertains can easily implement the invention. However, the present disclosure may be embodied in many different forms and is not limited to the embodiments described herein.

### Examples

### Example 1

An aramid-based polyamide polymer including 68 mol% of the repeating unit of Formula 1A, 17 mol% of the repeating unit of Formula 1B, and 15 mol% of the repeating unit of Formula 2A was prepared.

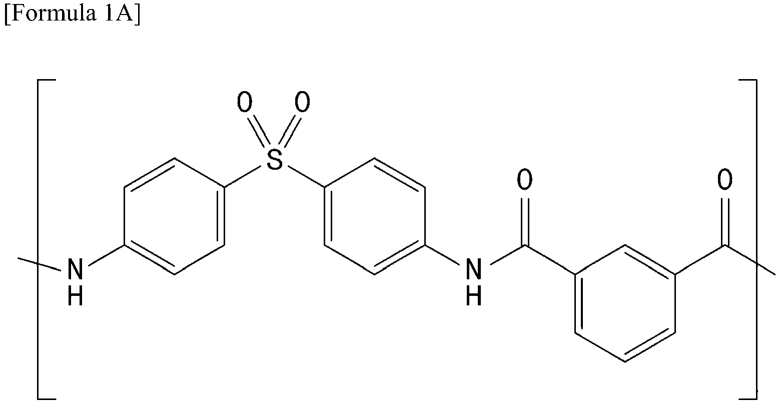

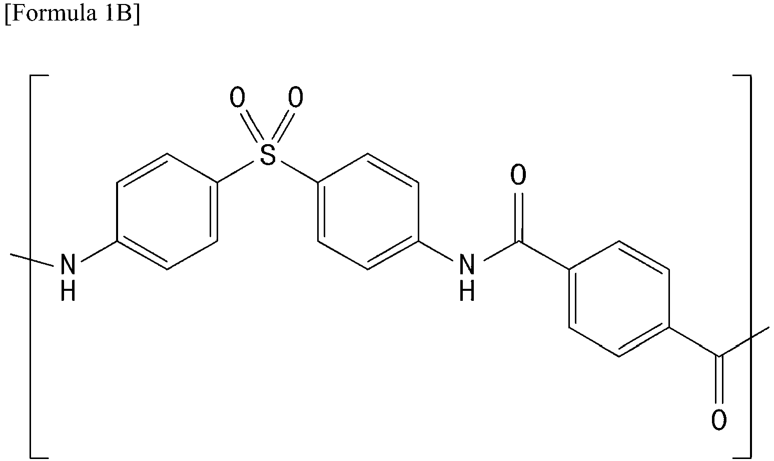

[Formula 2A] -[NH-(CH₂)₆-NHCO-(CH₂)₆-CO]-

A positive electrode active material (LiNi_{0.84}Co_{0.08}Mn_{0.08}O₂), a conductive material (carbon black), and the aramid-based polyamide polymer were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 73 wt% based on the total weight of the positive electrode slurry composition.

### Example 2

An aramid-based polyamide polymer including 60 mol% of the repeating unit of Formula 1A, 15 mol% of the repeating unit of Formula 1B, and 25 mol% of the repeating unit of Formula 2A was prepared.

A positive electrode active material (LiNi_{0.84}Co_{0.08}Mn_{0.08}O₂), a conductive material (carbon black), and the aramid-based polyamide polymer were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 73 wt% based on the total weight of the positive electrode slurry composition.

### Comparative Example 1

A positive electrode active material (LiNi_{0.84}Co_{0.08}Mn_{0.08}O₂), a conductive material (carbon black), and a binder (polyvinylidene fluoride (PVDF)) were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 70 wt% based on the total weight of the positive electrode slurry composition.

### Comparative Example 2

An aramid-based polyamide polymer including 78 mol% of the repeating unit of Formula 1A, 20 mol% of the repeating unit of Formula 1B, and 2 mol% of the repeating unit of Formula 2A was prepared.

A positive electrode active material (LiNi_{0.84}Co_{0.08}Mn_{0.08}O₂), a conductive material (carbon black), and the aramid-based polyamide polymer were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 73 wt% based on the total weight of the positive electrode slurry composition.

### Comparative Example 3

An aramid-based polyamide polymer including 40 mol% of the repeating unit of Formula 1A, 10 mol% of the repeating unit of Formula 1B, and 50 mol% of the repeating unit of Formula 2A was prepared.

A positive electrode active material (LiNi_{0.84}Co_{0.08}Mn_{0.08}O₂), a conductive material (carbon black), and the aramid-based polyamide polymer were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 73 wt% based on the total weight of the positive electrode slurry composition.

### Comparative Example 4

An aramid-based polyamide polymer including 48 mol% of the repeating unit of Formula 1A, 12 mol% of the repeating unit of Formula 1B, and 40 mol% of the repeating unit of Formula 2A was prepared.

A positive electrode active material (LiNi_{0.84}Co_{0.08}Mn_{0.08}O₂), a conductive material (carbon black), and the aramid-based polyamide polymer were mixed in N-methyl-2-pyrrolidone at a weight ratio of 96 : 2 : 2, and stirred with a high-speed stirrer (Homodisper) at 1500 rpm for 2 hours to prepare a positive electrode slurry composition.

At this time, the solid content of the positive electrode slurry composition was 73 wt% based on the total weight of the positive electrode slurry composition.

### Experimental Example 1-Viscosity Evaluation

The positive electrode slurry compositions prepared in Examples 1 to 2 and Comparative Examples 1 to 4 were measured using Rheometer MCR 302 manufactured by Anton Paar, and the viscosity was measured at 25°C and a shear rate of 2.5 (1/s). Furthermore, they were each stored at 25°C and the viscosity was measured at 25°C after 3 days and after 7 days . The results are presented in Table 1 below.

**[Table 1]**

| | Viscosity after day 0 (cP) | Viscosity after day 3 (cP) | Viscosity after day 7 (cP) |
|---|---|---|---|
| Example 1 | 11,900 | 12,500 | 13,200 |
| Example 2 | 85,00 | 8,600 | 9,000 |
| Comparative Example 1 | 12,100 | 37,500 | Unmeasurable |
| Comparative Example 2 | 35,200 | 36,100 | 35,900 |
| Comparative Example 3 | 2,200 | Phase Separation | Phase Separation |
| Comparative Example 4 | 4,500 | Phase Separation | Phase Separation |

It was confirmed that Examples 1 and 2 maintained a stable phase even after 7 days of storage as compared to Comparative Example 1, in which a conventional polyvinylidene fluoride (PVdF) binder was used. In addition, it was confirmed that Examples 1 and 2 exhibited appropriate viscosity and maintained a stable phase, compared to Comparative Examples 2 to 4.

### Experimental Example 2-Measurement of Adsorption Amount

5g of each of the positive electrode slurry compositions prepared in Example 1 and Comparative Example 1 was centrifuged at 20,000 rpm for 30 minutes using a centrifuge (Supra R30, Hanil Scientific Inc.) to separate the solid content and the supernatant.

The viscosity of the supernatant was measured using a Brookfield viscometer (DV-II+PRO Viscometer, Brookfield Corporation) at 25°C, 50 RH %, and 30 Hz, and the results were then compared to the previously obtained viscosity data according to the polyvinylidene fluoride (PVdF) content (mg/g) in N-methyl-2-pyrrolidone (NMP) to obtain the concentration of the supernatant. From this, the residual amount of the binder in the supernatant was calculated, and then excluded from the amount of the added binder to obtain the content (mg/g) of the adsorbed binder based on 1g of the positive electrode active material.

The results are presented in Table 2 below.

**[Table 2]**

| | Content of Adsorbed Binder (mg/g) |
|---|---|
| Example 1 | 0.2 |
| Comparative Example 1 | 8.1 |

In Example 1, the content of the adsorbed binder based on 1g of the positive electrode active material was measured to be much smaller compared to Comparative Example 1, in which a conventional polyvinylidene fluoride (PVDF) binder was used, and thus the time-dependent change during long-term storage is expected to be small.

## Claims

1. A positive electrode slurry composition comprising a positive electrode active material, a positive electrode conductive material, and a positive electrode binder,
wherein the positive electrode binder includes an aramid-based polyamide polymer including a repeating unit of Formula 1 and a repeating unit of Formula 2,
and the molar fraction of the repeating unit of Formula 2 is 11 to 30 mol% based on the number of moles of the total repeating units of the aramid-based polyamide polymer.
[Formula 1] -[NH-A₁-NHCO-A₂-CO]-
in Formula 1, A₁ and A₂ are each independently a divalent organic group having an aromatic ring,
[Formula 2] -[NH-B₁-NHCO-B₂-CO]-
in Formula 2, B₁ and B₂ are each independently a divalent aliphatic organic group.

2. The positive electrode slurry composition according to claim 1,
wherein the molar fraction of the repeating unit of Formula 1 is 70 to 89 mol% based on the number of moles of the total repeating units of the aramid-based polyamide polymer.

3. The positive electrode slurry composition according to claim 1,
wherein in Formula 1, A₁ and A₂ are each independently any one selected from Formula 1-1 to Formula 1-5. 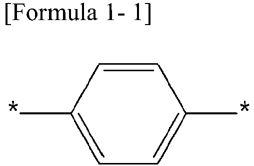 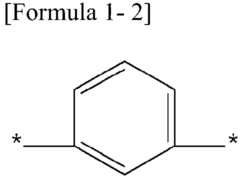 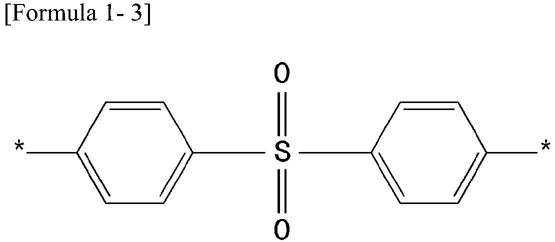 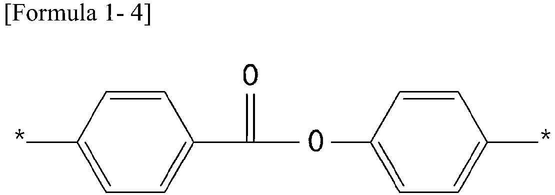 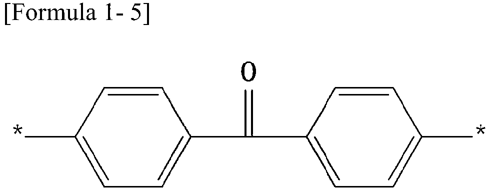 wherein, in Formula 1-1 to Formula 1-5, * is a bonding site.

4. The positive electrode slurry composition according to claim 1,
wherein B₁ and B₂ are each independently an alkylene group having 2 to 50 carbon atoms.

5. The positive electrode slurry composition according to claim 1,
wherein the aramid-based polyamide polymer has a weight-average molecular weight of 200,000 g/mol to 600,000 g/mol.

6. The positive electrode slurry composition according to claim 1,
wherein the aramid-based polyamide polymer includes one or more functional groups selected from a carbonyl group, a carboxy group, and an ester group.

7. The positive electrode slurry composition according to claim 6,
wherein the functional group is included in an amount of 0.01 to 0.3 mol% based on the total number of moles of the aramid-based polyamide polymer.

8. The positive electrode slurry composition according to claim 1,
wherein the positive electrode slurry composition has a viscosity of 2,000 cP to 50,000 cP at 25°C.

9. The positive electrode slurry composition according to claim 1,
wherein a solid content is 55 to 80 wt% based on the total weight of the positive electrode slurry composition.

10. A positive electrode comprising a positive electrode current collector and a positive electrode active material layer including a positive electrode active material, a positive electrode conductive material, and a positive electrode binder,
wherein the positive electrode binder includes an aramid-based polyamide polymer including a repeating unit of Formula 1 and a repeating unit of Formula 2,
and the molar fraction of the repeating unit of Formula 2 is 11 to 30 mol% based on the number of moles of the total repeating units of the aramid-based polyamide polymer,
[Formula 1] -[NH-A₁-NHCO-A₂-CO]-
in Formula 1, A₁ and A₂ are each independently a divalent organic group having an aromatic ring,
[Formula 2] -[NH-B₁-NHCO-B₂-CO]-
in Formula 2, B₁ and B₂ are each independently a divalent aliphatic organic group.

11. The positive electrode according to claim 10,
wherein the molar fraction of the repeating unit of Formula 1 is 70 to 89 mol% based on the number of moles of the total repeating units of the aramid-based polyamide polymer.

12. The positive electrode according to claim 10,
wherein the aramid-based polyamide polymer is included in an amount of 0.1 to 5 wt% based on the total weight of the positive electrode active material layer.

13. The positive electrode according to claim 10,
wherein the positive electrode active material includes a lithium transition metal oxide represented by Formula 3,
[Formula 3] LiₐNi_{1-x-y}COₓM¹_{y}M²_{z}O₂
in Formula 3,
M¹ is Al, Mn or a combination thereof,
M² is one or more elements selected from Zr, Ti, Mg, Ta, Nb, W, Mo and Cr,
wherein 1.0≤a≤1.3, 0<x<0.1, 0<y<0.1, 0≤z≤0.1, 0.8≤1-x-y<1.0.
